(19) Europäisches Patentamt / European Patent Office / Office européen des brevets

(11) **EP 3 163 486 A1**

(12) **EUROPEAN PATENT APPLICATION**

(43) Date of publication:
**03.05.2017 Bulletin 2017/18**

(21) Application number: **15306740.0**

(22) Date of filing: **02.11.2015**

(51) Int Cl.:
*G06F 21/34* (2013.01)　　　*G06Q 20/10* (2012.01)
*G06Q 20/20* (2012.01)　　　*G06Q 20/34* (2012.01)
*G06Q 20/40* (2012.01)　　　*G07F 7/02* (2006.01)
*G07F 7/10* (2006.01)　　　*H04L 9/32* (2006.01)
*H04L 29/06* (2006.01)　　　*H04W 12/08* (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **GEMALTO SA
92190 Meudon (FR)**

(72) Inventors:
• **PERTICARA, François
92190 Meudon (FR)**
• **TRIPOTIN, Guennole
92190 Meudon (FR)**
• **FAHER, Mourad
92190 Meudon (FR)**

(74) Representative: **Delaval, Guillaume Laurent et al
Gemalto SA
Intellectual Property Department
6, rue de la Verrerie
92197 Meudon Cedex (FR)**

(54) **A METHOD TO GRANT DELEGATE ACCESS TO A SERVICE**

(57)　This invention relates to a method for a first user (T-user) to delegate to at least a second user (UT-user) a right of access to an electronic service using a security token, a delegation code (T-CODE) being allocated to the second user (UT-user) under the control of the first user (T-user) and securely stored in the security token. The method comprises the steps of providing (111) by the second user the delegation code (T-CODE) to the security token using a user interface adapted to exchange data with the security token; verifying (112) by the security token that the delegation code (T-CODE) provided by the second user (UT-user) is similar to the delegation code which is securely stored into the security token; in case of positive verification, granting access (113) for the second user (UT-user) to the electronic service.

**Fig. 2**

**Description**

TECHNICAL FIELD

The present invention relates to a method to grant delegate access to a service and more generally to the field of electronic and software security.

BACKGROUND OF THE INVENTION

Users of electronic devices or smartcards that are under tutelage for any reasons lack reliable means to access electronic services especially when the access to such services is under restrictions or with specific requirements. For example, the access to an electronic service may be restricted taking into account minority, legal restriction of rights, physical impairment, crippled persons and parental delegation to children. The access can also be restricted for hierarchy reasons or administrative justification.

Therefore, there is a need for a technical solution allowing securely to a person under tutelage of any kind as above mentioned gaining access to a service with the authorization of their tutor.

SUMMARY OF THE INVENTION

This invention relates to a method for a first user to delegate to at least a second user a right of access to an electronic service using a security token, a delegation code being allocated to the second user under the control of the first user and securely stored in the security token. The method comprising the steps of:

- providing by the second user the delegation code to the security token using a user interface adapted to exchange data with the security token;
- verifying by the security token that the delegation code provided by the second user is similar to the delegation code which is securely stored into the security token;
- in case of positive verification, granting access for the second user to the electronic service.

In one embodiment, the method comprises a step requesting the delegation code to the second user at the time of accessing to the electronic service.

According to one example, the access to the electronic service is granted by the security token by generating an electronic signature subsequently to the positive verification of the delegation code.

According to another example, the access to the electronic service is granted by the security token by generating a second delegation code adapted for being used subsequently by the second user to access to the electronic service.

This invention also relates to a method for a first user to configure the delegation of a right of access to an electronic service to at least a second user using a security token with an embedded application configured to implement the delegation of right, the method comprising the steps of:

- authenticating the first user by the security token in order to initiate the configuration of the delegation of right under its control;
- providing a delegation code to be used by the second user for access to the electronic service under tutelage of the first user;
- storing the delegation code into the security token.

In one example, the method also comprises a step of selecting one embedded application configured to implement the delegation of right among a plurality of applications embedded into the security token.

According to one embodiment, the method also comprises a step of configuring a delegation profile memorized in the security token. A delegation profile comprises at least one parameter defining the permissions associated to the right of accessing to the electronic service.

According to one aspect of the invention, the delegation profile comprises a parameter defining a maximum number of accesses to the electronic service allowed to the second user by the delegation of rights.

According to another aspect of the invention, the first user is authenticated using a security code dedicated to initiating the configuration of the delegation of right.

In one example, the delegation code is chosen by the first user.

Alternatively, the delegation code can be chosen by the second user.

The invention also relates to a security token comprising an embedded application configured to implement a delegation of right from a first user to a second user for accessing to an electronic service and a storing securely a delegation code allocated to the second user under the control of the first user, said security token being configured to:

- receive from the second user through a user interface a delegation code;
- verify that the delegation code provided by the second user is similar to the delegation code which is securely stored;
- grant access for the second user to the electronic service in case of positive verification.

According to one aspect of the invention, the security token comprises an embedded interface.

The invention also related to a computer program for instructing a computer to perform the method for a first user to delegate to at least a second user a right of access to an electronic service using a security token as described above.

The invention also related to a computer program for instructing a computer to perform the method for a first user to configure the delegation of a right of access to an electronic service to at least a second user using a security token with an embedded application configured to implement the delegation of right as described above.

BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:

- Figure 1A and Figure 1B illustrate schematically a technique to set up a delegation of rights using a security token and then to use these delegated rights to access to an electronic service;
- Figure 2 is an exemplary architecture of a security token that may be used in conjunction with the invention;
- Figure 3 is a first example of flowchart illustrating a method for granting access to one or several electronic services;
- Figure 4 is a second example of flowchart illustrating a method for granting access to one or several electronic services.

DETAILED DESCRIPTION

Throughout the figures, the same reference numerals and characters, unless otherwise stated, are used to denote like features, elements, components or portions of the illustrated embodiments. Moreover, while the subject invention will now be described in detail with reference to the figures, it is done so in connection with the illustrative embodiments. It is intended that changes and modifications can be made to the described embodiments without departing from the true scope and spirit of the subject invention as defined by the appended claims.
In this description, the expression electronic service refers to any digital service implemented using software and/or electronic means. An electronic service can implement a restricted access. A restricted access to an electronic service can be set up in the context of computer security and implements techniques such as authentication, authorization or access approval.
An example of electronic service that is used in this description for exemplary purpose is access control in the context of physical security for limiting the access to a given geographical zone such as a working area or a country to authorized users only.

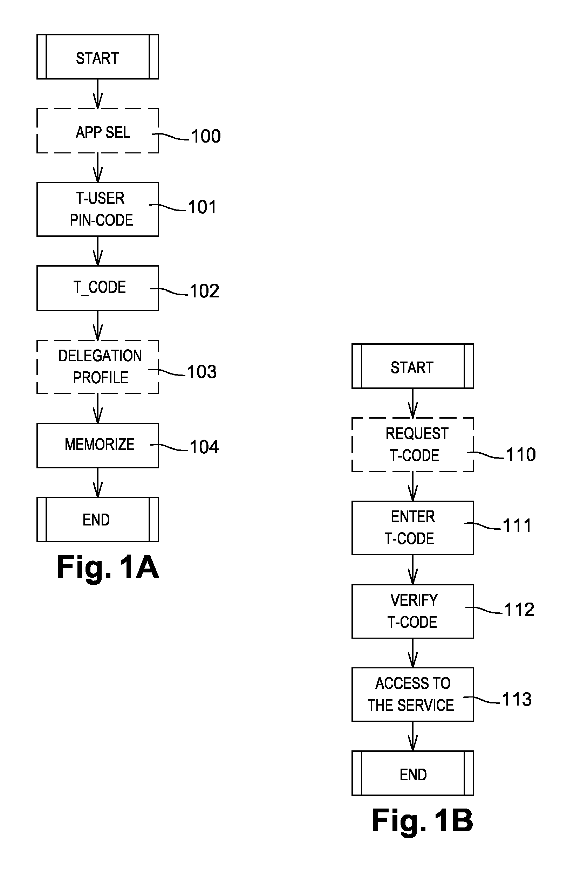

**Figure 1 A** and **Figure 1 B** illustrate schematically a technique to set up a delegation of rights using a security token and then to use these delegated rights to access to an electronic service.
**Figure 1A** illustrates the process of delegating by a tutor user to an under tutelage user one or several rights to access to an electronic service.
The tutor user designated in this description as the T-user is a person who owns the rights to access to an electronic service and who wishes to delegate all or part of its access rights to an under tutelage user designated as the UT-user.
Once the security token is inserted in a terminal allowing the T-user and possibly the UT-user to interact with the token through a user interface, several steps can be applied to set-up the delegation of rights.
In a first step 100, the T-user interacts with the security token to select the application to be used for the delegation of rights. This supposes that the security token embeds several applications. The skilled person will easily understand that step 100 is useless if the security token comprises a single application. Therefore, step 100 should be considered as optional. Advantageously, electronic services such as payment, transportation or access control can be implemented on the same security token, all or part of these applications allowing a delegation of right of the T-user to the UT-user.
A second step 101 is then applied for the T-user to enter a security code, typically a PIN code (Personal Identifier Number). The aim of this code is to authenticate the T-user before allowing him to configure the delegation of rights.
Step 102 is a step that is applied to generate or to choose a delegation code, hereafter designated as a T-CODE. Several alternatives can be considered in the context of this invention.
In a first alternative, the T-CODE can be generated using an algorithm based for example on random number generation. In that case the T-CODE will be then displayed for the UT-user to memorize it for further use.
In a second alternative, the T-user will be asked to enter the T-CODE using the user interface. The T-CODE can also be selected by the T-user among a list which is displayed on a screen of the terminal.
A third alternative can also be considered. This one is similar to the second alternative except that the UT-user chooses the T-CODE instead of the T-user. Advantageously, this makes possible for the UT-user to be the only person knowing the code. As a consequence, the use of the delegated rights by the UT-user will be highly secured.
Step 103 then aims at configuring the delegation profile. For that purpose, the UT-user can select or choose the type of rights and set-up parameters associated to the delegation, for example a validity period, a maximum number of accesses to the electronic service or other type of relevant parameter that can be associated to the delegation profile.
The delegation profile corresponds for example to a set of at least one file aggregating parameters defining the permissions associated to the right of accessing to the electronic service.
For example, if the electronic service is an application allowing to generate electronic signatures that are then used for accessing a corporate secure area, the delegation profile may comprise a delegation right to access to said secure area associated to a first parameter defining a duration of one day during which the UT-user will be able pass the portals securing the access. The delegation profile may also comprise a second parameter defining a limited number of signature generations meaning that the number of portals that could be opened by the UT-user in the secure area will be limited. Step 103 is optional as data defining the delegated rights and their perimeter of use can be set up by default. In that case, there is no need to generate a particular delegation profile for each new delegation of rights.

Then, the T-CODE and the delegation profile will be memorized 104 securely in the memory of the security token. The person skilled in the art will appreciate that this memorization step can be performed at any time and that the T-CODE and the delegation profiles can be memorized separately.

**Figure 1B** illustrates the process of using by an under tutelage user one or several rights delegated by a tutor user in order to access to an electronic service.

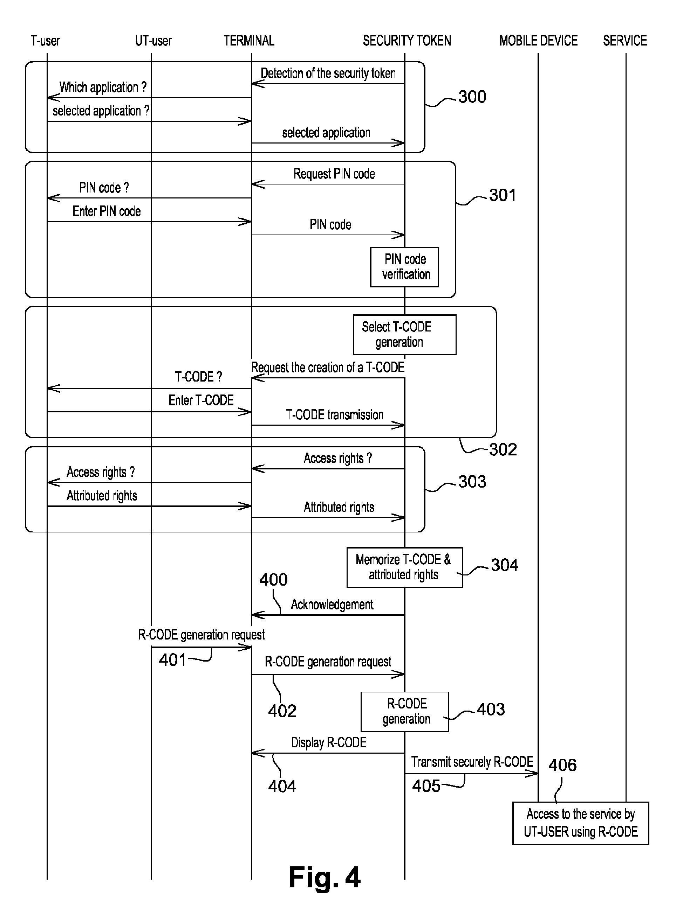

Once the delegation of rights is set up, the UT-user can access to the electronic service using its T-CODE directly or indirectly, that is to say using an intermediate code R-CODE as illustrated in Figure 4.

For using the delegated rights, the T-user is first requested 110 to enter 111 the T-CODE. Then, it is verified 112 that the T-CODE which is memorized in the security token corresponds to the T-CODE entered by the T-user for accessing to the electronic service. If this is the case, the access to the service is granted 113.

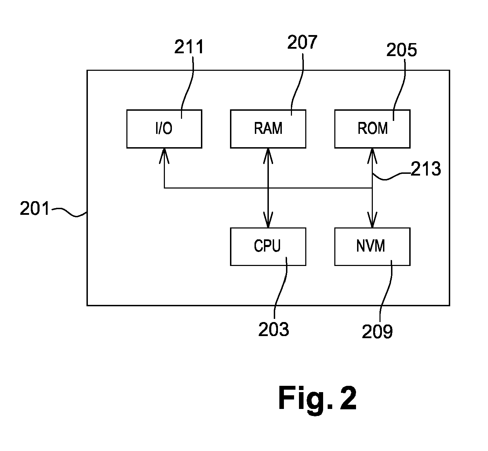

**Figure 2** is an exemplary architecture of a security token that may be used in conjunction with the invention.

A security token can be implemented using a secure element. A secure element is a device comprising a memory, a microprocessor and an operating system for computing treatments. Such secure elements may comprise a plurality of memories of different types. They are called "secure" because they are able to control the access to the data they contain and to authorize or not the use of data by other machines. The secure elements may also provide computation services based on cryptographic components. In general, secure elements have limited computing resources and are intended to be connected to a host machine. Secure elements may be removable or fixed to a host device. Smart cards are portable secure elements.

The secure elements may embed an object-oriented virtual machine in order to be able to run applications written in an object-oriented language. Usually, these object-oriented applications manage applicative data which are stored into the secure element. For instance, many smart cards comprise a virtual machine and applets compliant with Javacard (R) specifications. The applications which are stored and installed into a secure element are usually referred to through an identifier. Such an identifier may be an Application IDentifier (AID) as defined by IS07816-5 standard for example. An application is usually managed through a package which is loaded in the secure element. Then an instance of the application is created in the secure element. An AID is used for identifying each application package. An AID is used for identifying each application instance. Until now each AID of application package and each AID of application instance must be unique in a secure element. The uniqueness of each AID allows avoiding ambiguity when referring to an element in a secure element. The virtual machine manages both the administration and the interpretation/execution of the applications. The administration corresponds to the loading, the creation/instantiation, the upgrading and the removing of application.

The simplified architecture provided in 201, according to the example of Figure 2, has a central processing unit 203, a read-only memory (ROM) 205, a random access memory (RAM) 207, a non-volatile memory (NVM) 209, and a communications interface 211 for receiving input and placing output to a terminal, either directly or via intermediary devices. These various components are connected to one another, for example, by bus 213. In one embodiment of the invention, a communications module, as well as other software modules, would be stored on the resource-constrained device 201 in the ROM 205. In alternative embodiments, the software modules stored in ROM 205 would be stored in a flash memory or other types of non-volatile memory.

The ROM 205 would also contain some type of operating system, for example, a Java Virtual Machine. During operation, the CPU 203 operates according to instructions in the various software modules stored in the ROM 205 or NVM 209.

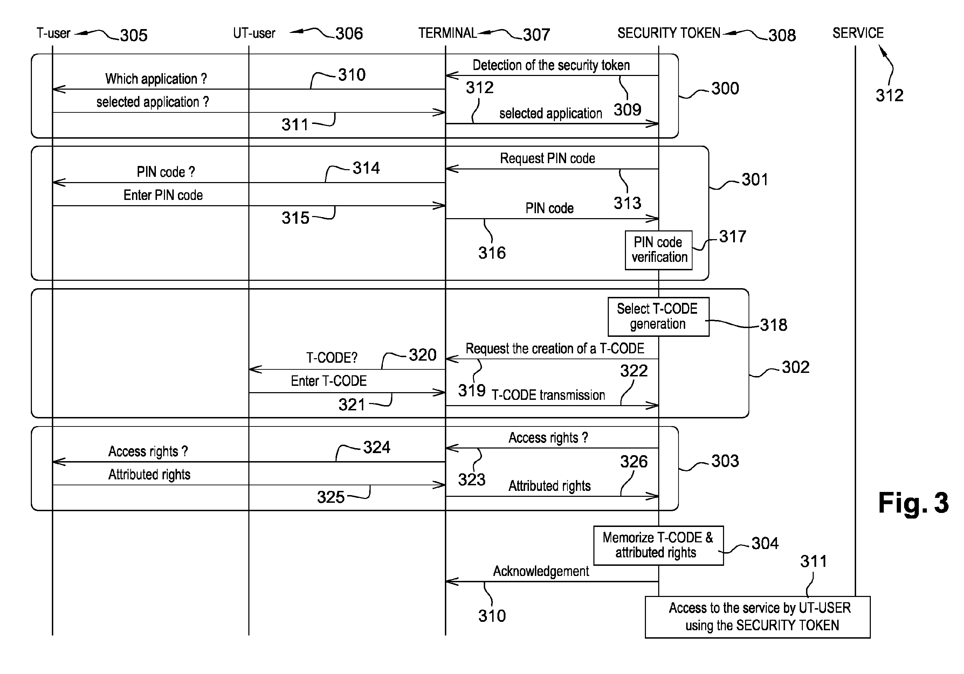

**Figure 3** is a first example of flowchart illustrating a method for granting access to one or several electronic services.

In this example, four entities are cooperating. A first user, herein designated as the tutor user T-user, is a person who owns rights to access to an electronic service and who wishes to delegate all or part of its access rights to a second user herein designated as the under tutelage user UT-user.

The T-user has at his disposal a security token that can be configured for that purpose. The security token is a physical device that can be used for secure authentication of a user. A smartcard, a UICC (Universal Integrated Circuit Card), or a mobile terminal in conjunction or not with an embedded UICC are examples of security tokens that can be used in the context of the invention. The skilled person will understand that this list is non-limitative and that other kind of security token may be used.

The embodiments provided hereafter are mostly using a smartcard as a security token. Such a smartcard can carry out a transaction through its contact interface when it is hosted in a smartcard reader. Smartcards are widely used to store sensitive information such as cryptographic keys or software routines that implement valuable algorithms or know-how.

In order to set up the delegation of rights, the UT-user and the T-user are initially located near a terminal adapted to interact with a security token. In this example, the security token belongs to the T-user and will be lend or given to the UT-user for granting delegate access to an electronic service.

The security token embeds an application implementing an electronic service and allowing a delegation of rights. The electronic service to be accessed by the UT-user thanks to the delegation mechanism can be of any kind, for example accessing to a geographical area (corporate restricted area), generating digital signatures for authenticating the emitter of a document, accessing to a web portal, transport, electronic ticketing or of other type.

The terminal is considered being in a trusted environment. Once the security token 308 is inserted into the terminal 307, the T-user can be authenticated using for example mutual or external authentication.

Then, the T-user selects 300 the application. For that purpose, a request 309 is sent by the security token 308 to the terminal 307. The terminal implements a user interface allowing the T-user 105 and optionally the UT-user 306 to interact with the security token 308. It comprises for example a keyboard and a screen. The interface displays 310 a set of application names for the T-user to select 311 one of them. An identifier of the selected application is then transmitted 312 by the terminal 307 to the security token 308.

Once the application allowing a delegation of right is selected, the T-user is authenticated 301. For that purpose, he is requested 313, 314 to enter a delegation PIN code.

The T-user enters his delegation PIN code 315 and this PIN is then transmitted 316 to the security token 308 and verified 317.

Then, a delegation code T-CODE is chosen 302. If the electronic service is adapted to generate digital signatures, the application can set a flag denoting a pre-signature state. This pre-signature state puts on hold the generation of digital signatures and selects 318 a process for setting up a code T-CODE. Then, the process triggers 319 a prompt 320 for requesting a T-CODE to the UT-user. In that case, the UT-user can choose a T-CODE without disclosing it to the T-user. In an alternative embodiment, the T-CODE can be requested to the T-user.

Once the T-CODE is entered 321 by the UT-user, it is transmitted 322 by the terminal 307 to the secure token 308.

Then, the T-user is asked to define precisely which rights are delegated to the UT-user 303. This choice will allow the T-user to define a delegation profile. This delegation profile may comprise information such as:

- a limited number of accesses;
- a maximum duration above which the delegation of right expires;
- a level of security for the geographical zone to access; this can be useful when in a company several zone with different security level are defined.

These profile parameters are given for exemplary purpose only and should not be considered as limitative. Other kind of information can be considered. For example, if the security service is adapted to generate signatures adapted to sign electronic documents, other kind of parameters may be better suited for setting up the delegation of rights. As already mentioned in this description, the process leading to define the delegation rights by the T-user is optional. This stage is not needed, in particular when the delegation rights are defined by default.

As an example, for configuring the delegation profile, the security token 308 sends a request 323 to the terminal 307 which then triggers the prompt 324 of a list of possible options. The T-user 305 then chooses 325 between different options thanks to the terminal user interface and this choice is transmitted 326 to the security token 308.

The T-CODE and the delegation profile defining the rights attributed by the T-user to the UT-user are then stored 304 into the security token 308. An acknowledgment message can then be sent 310 by the security token 308 to the terminal 307 in order to inform the T-user and/or the UT-user that the attribution of the delegation rights is completed. The person skilled in the art will appreciate that the storing of the T-CODE and/or the delegation profile can happen at any time once they are chosen/selected.

At this stage, the T-user can lend or give the security token 308 to the UT-user. The UT-user can then use the security token to access 311 to the service 312 when needed. For instance, in order to access to a secured area in a corporate building, the UT-user will be requested to input a code on an access control terminal located near the entrance of said area and then to present the security token near the terminal. This terminal and the security token are for example configured to communicate using a wireless technology such as NFC (Near Field Communication). The T-CODE will then be transmitted securely from the control terminal to the security token. The security token will check the T-CODE, that is to say compare the received T-CODE with the one that has been chosen at step 302 and memorized at step 304. If the T-CODE is positively verified, then the security token will generate a signature using state of the art techniques and transmit this signature to the access terminal. This signature will be then verified by the access control system and the access to the secure area will then be granted to the UT-user in case of a positive verification.

In an alternative embodiment, the security token may comprise an embedded interface. An example of such security token is a so called display card. The expression "display card" generally refers to a smartcard with an LCD screen and touch sensitive buttons allowing the UT-user and the T-user to interact directly with the security token, that is to say without the necessity of using a user interface provided by a terminal. In this alternative, the terminal 307 is not required. The delegation set-up phase follows the same principles as the one depicted with the help of Figure 1, but the functionalities of the terminal 307 used for the setup of the delegation and the functionalities of the security token 108 as depicted above can be merged into a security token comprising a user interface. In that case, the access to the service can be implemented in a very simple way. To access to the corporate secured area, the UT-user will select the application on the card and input the T-CODE using the user interface embedded on the security token. Then, the security token verifies that the T-CODE entered by the UT-user corresponds to the one memorized in its internal memory. If the T-CODE is positively verified, then a message will be prompted on the LCD screen inviting the UT-user to present its security token near the access control terminal. As for the previous alternative, the access control terminal and the security token can communicate using a wireless technology such as NFC (Near Field Communications). When a communication channel is established between the security token and the access control terminal, the security token will generate a signature using state of the art techniques and transmit this signature to the access terminal. This signature will be then verified by the access control system and, in case of a positive verification, the access to the secure area will be then granted to the UT-user.

**Figure 4** is a second example of flowchart illustrating a method for granting access to one or several electronic services.

The steps for selecting the application 300, for requesting a T-user PIN code 301, for selecting a T-CODE 302, for the T-user to configure a delegation profile 303 and for memorizing said T-CODE and delegation profile 304 can be implemented in the same way as those depicted on Figure 3.

In this example, the security token belongs to and will be kept by the T-user. It will be used to generate a second code designated as "R-CODE".

When the configuration phase of the delegation ends and is confirmed 400, the UT-user is able to ask for an R-CODE. For that purpose, he has to interact with the security token of the T-user.

The UT-user will then request 401 an R-CODE. For that purpose, he will enter its T-CODE via a user interface that allows an interaction with the security token. The T-CODE will then be verified by the security token, and upon a positive verification, the generation of an R-CODE will be triggered.

The generated R-CODE will then be displayed 404 on a screen of the terminal and transmitted 405 to the mobile device in which it will be memorized.

The access to the service is implemented thanks to an application installed on the mobile device and supporting the delegation of rights. To have an access 406 to the service, the UT-user will use this application and will be requested to enter its R-CODE. This application will check that the R-CODE entered by the UT-user is identical to the one which is stored in its internal memory. In case of a positive verification, the access to the service will be granted.

The R-CODE can be generated as using a key derivation function KDF belonging to the state of the art and using for example the following inputs:

$$R\text{-}CODE := KDF(T\text{-}CODE, PIN, SC)$$

where

  T-CODE is the delegation code

  PIN is the T-user's PIN code

  SC is a sequence counter incremented at each delegation.

The resulting R-CODE may be either directly employed by the UT-user or input on a device with eSE or UICC to serve as session keys with the remote server onto which the digital signature is to be executed by delegation. Further data may be input to KDF function if needed such as padding or additional data denoting the number of signature authorized.

## Claims

1. A method for a first user (T-user) to delegate to at least a second user (UT-user) a right of access to an electronic service using a security token, a delegation code (T-CODE) being allocated to the second user (UT-user) under the control of the first user (T-user) and securely stored in the security token, the method comprising the steps of:

    - providing (111) by the second user the delegation code (T-CODE) to the security token using a user interface adapted to exchange data with the security token;
    - verifying (112) by the security token that the delegation code (T-CODE) provided by the second user (UT-user) is similar to the delegation code which is securely stored into the security token;
    - in case of positive verification, granting access (113) for the second user (UT-user) to the electronic service.

**2.** A method according to claim 1, comprising a step requesting (110) the delegation code to the second user (UT-user) at the time of accessing to the electronic service.

**3.** A method according to any of the preceding claims, wherein the access to the electronic service is granted by the security token generating an electronic signature subsequently to the positive verification of the delegation code (T-CODE).

**4.** A method according to any of claims 1 to 3, wherein the access to the electronic service is granted by the security token generating a second delegation code (R-CODE) adapted for being used subsequently by the second user (UT-user) to access to the electronic service.

**5.** A method for a first user (T-user) to configure the delegation of a right of access to an electronic service to at least a second user (UT-user) using a security token with an embedded application configured to implement the delegation of right, the method comprising the steps of:

- authenticating (101) the first user (T-user) by the security token in order to initiate the configuration of the delegation of right under its control;
- providing (102) a delegation code (T-CODE) to be used by the second user (UT-user) for access to the electronic service under tutelage of the first user (T-user);
- storing (104) the delegation code (T-CODE) into the security token.

**6.** A method according to claim 5, comprising a step of selecting (100) one embedded application configured to implement the delegation of right among a plurality of applications embedded into the security token.

**7.** A method according to any of the claims 5 to 6, comprising a step of configuring (103) a delegation profile memorized in the security token and comprising at least one parameter defining the permissions associated to the right of accessing to the electronic service.

**8.** A method according to any of the claims 5 to 7, wherein the delegation profile comprises a parameter defining a maximum number of accesses to the electronic service allowed to the second user (UT-user) by the delegation of rights.

**9.** A method according to any of the claims 5 to 8, wherein the first user (T-user) is authenticated using a security code dedicated to initiating the configuration of the delegation of right.

**10.** A method according to any of the claims 5 to 9, wherein the delegation code is chosen by the first user (T-user).

**11.** A method according to any of the claims 5 to 9, wherein the delegation code is chosen by the second user (UT-user).

**12.** A security token comprising an embedded application configured to implement a delegation of right from a first user (T-user) to a second user (UT-user) for accessing to an electronic service and a storing securely a delegation code (T-CODE) allocated to the second user (UT-user) under the control of the first user (T-user), said security token being configured to:

- receive from the second user (UT-user) through a user interface a delegation code (T-CODE);
- verify that the delegation code (T-CODE) provided by the second user (UT-user) is similar to the delegation code which is securely stored;
- grant access for the second user (UT-user) to the electronic service in case of positive verification.

**13.** A security token according to claim 12, comprising an embedded interface.

**14.** A computer program for instructing a computer to perform the method of any of claims 1 to 4.

**15.** A computer program for instructing a computer to perform the method of any of claims 5 to 13.

**START**

APP SEL — 100

T-USER
PIN-CODE — 101

T_CODE — 102

DELEGATION
PROFILE — 103

MEMORIZE — 104

**END**

# Fig. 1A

**START**

REQUEST
T-CODE — 110

ENTER
T-CODE — 111

VERIFY
T-CODE — 112

ACCESS TO
THE SERVICE — 113

**END**

# Fig. 1B

**Fig. 2**

T-user ← 305    UT-user ← 306    TERMINAL ← 307    SECURITY TOKEN ← 308    SERVICE

Detection of the security token

Which application ? ← 310

312

selected application ? 309

selected application →

311

300

312

Request PIN code ←

PIN code ? ← 314

313

Enter PIN code →

PIN code

315

301

316

PIN code verification 317

Select T-CODE generation 318

Request the creation of a T-CODE ←

T-CODE? ← 320

322

Enter T-CODE →

319 T-CODE transmission →

321

302

Access rights ? ←

Access rights ? ← 324

326

Attributed rights →

323 Attributed rights →

325

303

Memorize T-CODE & attributed rights 304

Acknowledgement ←

310

311

Access to the service by UT-USER using the SECURITY TOKEN

Fig. 3

EP 3 163 486 A1

10

**Fig. 4**

Europäisches
Patentamt

European
Patent Office

Office européen
des brevets

# EUROPEAN SEARCH REPORT

Application Number

EP 15 30 6740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 497 411 A (PELLERIN JOSEPH C E [CA]) 5 March 1996 (1996-03-05) * abstract * * column 2, line 54 - column 4, line 67; figures 2,4a * ----- | 1-15 | INV. G06F21/34 G06Q20/10 G06Q20/20 G06Q20/34 G06Q20/40 G07F7/02 G07F7/10 H04L9/32 H04L29/06 H04W12/08 |
| A | US 2015/193600 A1 (MATSUDA KOTARO [JP]) 9 July 2015 (2015-07-09) * abstract * * paragraph [0012] - paragraph [0015] * ----- | 1-15 | |

TECHNICAL FIELDS
SEARCHED (IPC)

G06F
G06Q
G07F
H04L

The present search report has been drawn up for all claims

| Place of search | Date of completion of the search | Examiner |
|---|---|---|
| Munich | 8 March 2016 | San Millán Maeso, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 163 486 A1**

## ANNEX TO THE EUROPEAN SEARCH REPORT
## ON EUROPEAN PATENT APPLICATION NO.

EP 15 30 6740

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2016

| Patent document cited in search report | | Publication date | Patent family member(s) | | Publication date |
|---|---|---|---|---|---|
| US 5497411 | A | 05-03-1996 | CA<br>US | 2140564 A1<br>5497411 A | 12-09-1995<br>05-03-1996 |
| US 2015193600 | A1 | 09-07-2015 | JP<br>US | 2015130073 A<br>2015193600 A1 | 16-07-2015<br>09-07-2015 |

EPO FORM P0459

For more details about this annex : see Official Journal of the European Patent Office, No. 12/82

13